# EUROPEAN PATENT APPLICATION

(11) **EP 4 300 263 A1**
(43) Date of publication of application: **03.01.2024**
(21) Application number: 22305973.4
(22) Date of filing: 01.07.2022
(51) Int. Cl.: G06F 3/01

(54) **METHOD AND APPARATUS OF SIGNALING/PARSING HAPTIC DATA**

(71) Applicant: Go Touch VR, 59000 Lille (FR)
(72) Inventor: VEZZOLI, Eric, 75016 PARIS (FR); TAMAS, Adrian, 59000 LILLE (FR)
(74) Representative: RVDB

(57) **Abstract**

There is provided methods and apparatus of signaling/parsing data representative of a mapping between a haptic effect and one or more body parts of a body model (10) targeted by the haptic effect. The body model comprising a first plurality of body parts, e.g., fingers (110 to 114), hands (12), phalanxes, head (101), and a second plurality of groups of body parts. Each group of the second plurality comprises one or more body part(s) of the first plurality. The signaling/parsing of the data comprises writing/reading, into/from a container, first data identifying the targeted body part with reference to one or more groups of the second plurality the targeted body part belongs to.

## Description

### FIELD

The present application generally relates to the field of haptic and, in particular, to the processing of haptic related data. The present application relates to the signaling of data related to the identification of one or more parts of a body model targeted by one or more haptic effects and to the parsing of such data. The present application also related to methods and apparatus of encoding/decoding data representative of part(s) of a body model associated with the rendering of haptic effect(s).

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature, to provide information to an end user, for example in addition to visual and audio information when rendering multimedia contents.

Haptic feedback covers a wide range of possible stimulation embodiments but is mainly divided into tactile haptic technology and kinesthetic haptic technology: tactile haptic feedback (or tactile haptic effect) refers to sensations such as vibration, friction, or micro-deformation while kinesthetic haptic feedback (or kinesthetic haptic effect) refers to sensations that provide force sensations that can stimulate both mechanical stimuli as well as stimuli related to the position and the movement of the body.

The rendering of haptic feedback or haptic effect is obtained using haptic device, a haptic device corresponding to an arrangement of one or more haptic actuators. For example, vibrotactile effects might be obtained with the use of haptic devices such as ERMs (Eccentric Rotating Mass), LRAs (Linear Resonant Actuators), and large bandwidth actuators like VCM (Voice Coil Motors), or PZT (Piezoelectric Actuators). Kinesthetic effects might be rendered with actuators exercising a force impeding a limb movement, such effects being merely felt on the muscles and tendons than on the skin. Other examples of haptic devices comprise resistive force feedback devices, active force feedback devices and skin indentation devices.

Human haptic perception is complex topic. Indeed, the rendering of a same haptic effect on two different parts of the human body may generate different haptic perception by the person receiving the stimuli through a haptic device.

In an attempt to adapt a haptic effect to be rendered to the human body part targeted by the haptic effect, patent document WO2015185389A1 discloses the use of a three-dimensional (3D) body model (e.g., a skeleton or a mesh) to relate the haptic effect and the haptic device inputs. In this document, the body model is used to infer the haptic device input parameters using a transfer function associated with a physics engine.

The use of a simplified body model such as a skeleton, which is represented with joints and segments, limits the adaptation of the haptic effect to the body part targeted by the haptic effect.

The use of a body model represented with a mesh of mesh elements (e.g, polygons), called faces, increases the amount of data to be transmitted to the haptic device for rendering the haptic effect.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of signaling, into a container, a mapping between a haptic effect and at least a body part of a human body targeted by the haptic effect, called targeted body part, said human body being represented with a body model, the body model comprising a first plurality of body parts and a second plurality of groups of body parts, each group of the second plurality comprising at least a body part of the first plurality, the method comprising writing into the container first data identifying the targeted body part with reference to at least one group of the second plurality the targeted body part belongs to.

In an exemplary embodiment, the method further comprises:
- writing, into the container, second data identifying a side of the body model the targeted body part belongs to, the side being among right side and left side; and/or
- writing, into the container, third data identifying a face of the body model the targeted body part belongs to, the face being among front and back.

In an exemplary embodiment, the first data comprises a first identifier identifying the targeted body part and at least one second identifier identifying the at least one group of the second plurality the targeted body part belongs to.

In another exemplary embodiment, the first data comprises a third identifier identifying a logical operator.

In a further exemplary embodiment, when the logical operator corresponds to a NOT, the method further comprising writing, into the container, fourth data identifying a body part excluded from the at least one group of the second plurality the targeted body part belongs to.

In an additional exemplary embodiment, the method further comprises writing, into the container, fifth data representative of the haptic effect.

According to a second aspect of the present application, there is provided a method of parsing, from a container, data representative of a mapping between a haptic effect and at least a body part of a human body targeted by the haptic effect, called targeted body part, the human body being represented with a body model, the body model comprising a first plurality of body parts and a second plurality of groups of body parts, each group of the second plurality comprising at least a body part of the first plurality, the method comprising reading, from the container, first data identifying the targeted body part with reference to at least one group of the second plurality the targeted body part belongs to.

In an exemplary embodiment, the method further comprises:
- reading, from the container, second data identifying a side of the body model the targeted body part belongs to, the side being among right side and left side; and/or
- reading, from the container, third data identifying a face of the body model said targeted body part belongs to, the face being among front and back.

In an exemplary embodiment, the first data comprises a first identifier identifying the targeted body part and at least one second identifier identifying the at least one group of the second plurality the targeted body part belongs to.

In another exemplary embodiment, the first data comprises a third identifier identifying a logical operator.

In a further exemplary embodiment, when the logical operator corresponds to a NOT, the method further comprising reading, from the container, fourth data identifying a body part excluded from the at least one group of the second plurality the targeted body part belongs to.

In an additional exemplary embodiment, the method further comprises reading, from the container, fifth data representative of the haptic effect.

According to a third aspect of the present application, there is provided an apparatus of signaling, into a container, a mapping between a haptic effect and at least a body part of a human body targeted by the haptic effect, called targeted body part, wherein the apparatus comprises a memory associated with at least a processor configured to implement the method in accordance with the first aspect of the present application.

According to a fourth aspect of the present application, there is provided an apparatus of parsing, from a container, data representative of a mapping between a haptic effect and at least a body part of a human body targeted by the haptic effect, called targeted body part, wherein the apparatus comprises a memory associated with at least a processor configured to implement the method in accordance with the second aspect of the present application.

According to a fifth aspect of the present application, there is provided a container formatted to include data representative of a mapping between a haptic effect and at least a body part of a human body targeted by the haptic effect, called targeted body part, the human body being represented with a body model, the body model comprising a first plurality of body parts and a second plurality of groups of body parts, each group of the second plurality comprising at least a body part of the first plurality, the data comprising first data identifying the targeted body part with reference to at least one group of the second plurality the targeted body part belongs to.

According to a sixth aspect of the present application, there is provided a bitstream carrying data representative of a mapping between a haptic effect and at least a body part of a human body targeted by the haptic effect, called targeted body part, the human body being represented with a body model, the body model comprising a first plurality of body parts and a second plurality of groups of body parts, each group of the second plurality comprising at least a body part of the first plurality, the data comprising first data identifying the targeted body part with reference to at least one group of the second plurality the targeted body part belongs to.

According to a seventh aspect of the present application, there is provided a computer program product including instructions which, when the program is executed by one or more processors, causes the one or more processors to carry out a method according to the first aspect of the present application.

According to a eighth aspect of the present application, there is provided a non-transitory storage medium carrying instructions of program code for executing a method according to the first aspect of the present application.

According to a nineth aspect of the present application, there is provided a computer program product including instructions which, when the program is executed by one or more processors, causes the one or more processors to carry out a method according to the second aspect of the present application.

According to a tenth aspect of the present application, there is provided a non-transitory storage medium carrying instructions of program code for executing a method according to the second aspect of the present application.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic representation of a body model, in accordance with at least one exemplary embodiment;
**Figure 2** shows a schematic hierarchical representation of the body model of figure 1, in accordance with at least one exemplary embodiment;
**Figure 3** shows a schematic representation of a part of the body model of figure 1, in accordance with at least one exemplary embodiment;
**Figure 4** shows an example of a signaling / parsing scheme or of an encoding / decoding scheme of part(s) of the body model of figure 1 targeted by a haptic effect, in accordance with at least one exemplary embodiment;
**Figure 5** shows two remote devices communicating data representative of part(s) of the body model of figure 1 targeted by a haptic effect over a communication network, in accordance with at least one exemplary embodiment;
**Figure 6** shows an example of a container carrying data representative of part(s) of the body model of figure 1 targeted by a haptic effect, in accordance with at least one exemplary embodiment;
**Figure 7** shows a schematic block diagram of step(s) of a method of signaling data representative of part(s) of the body model of figure 1 targeted by a haptic effect into a container, in accordance with at least one exemplary embodiment;
**Figure 8** shows a schematic block diagram of step(s) of a method of parsing data representative of part(s) of the body model of figure 1 targeted by a haptic effect from a container, in accordance with at least one exemplary embodiment;
**Figure 9** illustrates a schematic block diagram of an example of a system in which various aspects and exemplary embodiments are implemented.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

At least one of the aspects generally relates to a method and apparatus of signaling into a container information representative of a mapping between a haptic effect and one or more body parts of a human body targeted by the haptic effect. Such body part(s) is(are) called targeted body part in the following description, the targeted body part comprising one or more body parts.

The human body is represented with a body model, the body model comprising a first plurality or first set of body parts, e.g. finger(s), hand(s), phalanx, head, and a second plurality of groups of body parts. Each group of the second plurality comprises one or more body part(s) of the first plurality.

The signaling of the mapping information comprises writing, into the container, first data identifying the targeted body part with reference to one or more groups of the second plurality the targeted body part belongs to, i.e., with reference to the group comprising the targeted body part.

Corresponding method and apparatus of parsing the information representative of the mapping between a haptic effect and targeted body part from the container also form one or more aspects of the present principles.

Exemplary embodiments of the present principles are directed to a method and apparatus of encoding information of data representative of the mapping between a haptic effect and targeted body part into a container; and to corresponding method and apparatus of decoding information of data representative of the mapping between a haptic effect and targeted body part from a container.

In brief, the present invention relates to the signaling/parsing and/or to the encoding/decoding of haptic related data to enable the rendering of one or more haptic effects by a haptic device arranged on a human body, i.e., on at least a part of the human body. The haptic related data may correspond to data representative of part(s) of a body model representing the human body, said body part(s) being targeted by the haptic effect to be rendered, i.e., the haptic effect being generated on the body part(s) by haptic actuator(s) (forming the haptic device) associated with the body part(s).

The use of the first data referring to the group of body parts comprising the body part to signal and identify the targeted body part(s) into the container enables for example to reduce the amount of data used for signaling (encoding) the information in the container and to optimize the parsing (respectively the decoding) comprised in the container received by the rendering engine and/or haptic device.

Indeed, when a haptic effect targets a plurality of body parts of the same type (e.g., all or parts of the phalanx), the use of the first data enables to efficiently identify these body parts by referring to only one group (e.g., the hand) that comprises said body parts.

Such a signaling / encoding scheme enables to optimize/reduce the amount of data communicated between components generating the haptic related data and the components consuming the haptic related data. The signaling / encoding scheme also enables to optimize/reduce processing time at rendering stage of the haptic effect.

A container may for example correspond to a bitstream, a network packet or a file, e.g., a text file or a binary file.

Binary structures such as binary files (e.g., ISOBMFF files) are one instantiation of a container. Binary files define the syntax for parsing and understanding the structures of files. They have a start and an end and typically holds self-contained information. Binary files are generally transported and stored as a whole.

However, binary files may be further segmented into smaller file units, e.g., transport packets, for the purpose of transmission over a network such as using SCTP (Synchronous Collaboration Transport Protocol), IRTP (Interactive Real-Time Protocol), ETP (Efficient Transport Protocol), RTNP (Real Time Network Protocol) or RTP/I (Real Time application-level Protocol for distributed Interactive media).

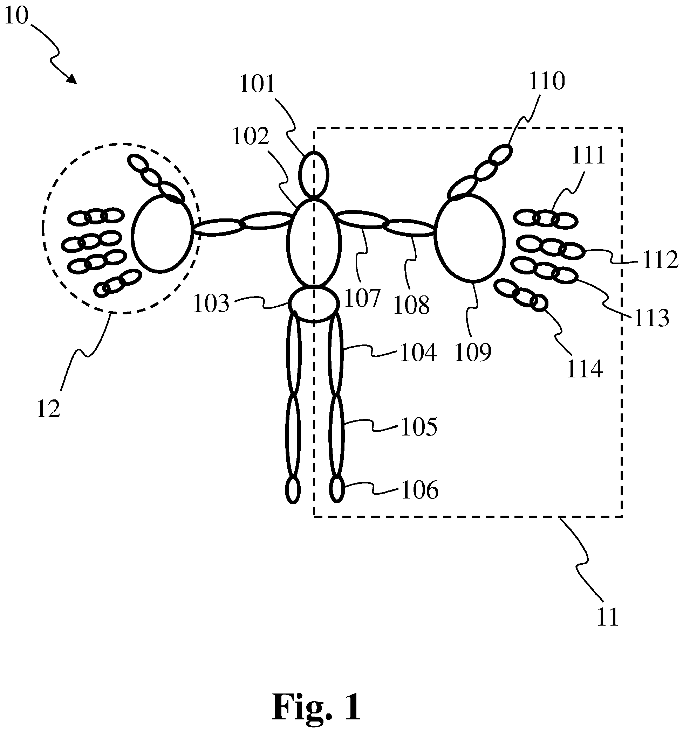

**Figure 1** illustrates a schematic representation of a body model 10 in accordance with at least one exemplary embodiment.

The body model 10 of figure 1 represents a human body and is used for identifying various parts of the human body.

The body model 10 comprises a first set of body parts and a second set of groups of body parts.

Each body part of the first set belongs to one or more groups of the second set and each group of the second set comprises one or more body parts of the second set.

A body part of the first set may for example correspond to a group of the second set.

For example, the second set of groups of body parts comprises the following groups:
- a group called "Head" 101 and comprising the following body parts: Hand and Neck;
- a group called "Torso" 102 and comprising only one body part, the torso;
- a group called "Waist" 103 and comprising only one body part, the waist;
- a group called "Leg" and comprising the following body parts: Upper 104, Lower 105 and Foot 106;
- a group called "Arm" and comprising the following body parts: Upper 107, Lower 108 and Hand;
- a group called "Hand" 12 and comprising the following body parts: Palm 109 and Fingers;
- a group called "Fingers" and comprising the following body parts: Thumb 110, Index 111, Middle 112, Ring 113 and Pinky 114;
- a group called "Phalanx" and comprising the following body parts: First, Second and Third;
- a group called "Foot" and comprising the following body parts: Plant and Fingers;
- a group called "Down", corresponding to the lower part of the body model, and comprising the following body parts: Waist and Leg;
- a group called "Up", corresponding to the upper part of the body model 10, and comprising the following body parts: Head, Chest and Arm;
- a group called "Right", corresponding to the right half of the body model 10, and comprising the following body parts: Head, Chest, Waist, Right Arm and Right Leg;
- a group called "Left" 11, corresponding to the left half of the body model 10, and comprising the following body parts: Head, Chest, Waist, Left Arm and Left Leg;
- a group called "Front", corresponding to the front face of the body model 10, and comprising the following body parts: Front Head, Front Chest, Front Waist, Front Arm and Front Leg;
- a group called "Back", corresponding to the back face of the body model 10, and comprising the following body parts: Back Head, Back Chest, Back Waist, Back Arm and Back Leg; and
- a group called "All" corresponding to the whole body model 10 and gathering all groups and body parts, i.e.: Head, Chest, Waist, Arm and Leg.

Naturally, the groups and body parts forming the body model are not limited to the hereinabove example. The number of groups and the number of body parts are also not limited to the hereinabove example and may be any number.

Each group of body parts may be identified with an identifier corresponding for example to a syntax element, for example one of the following syntax elements: "All", "Left", "Right", "Front", "Back", "Up", "Down", "Head", "Torso", "Waist", "Leg", "Arm", "Hand", "Foot", "Fingers".

In a same way, each body part may be identifier with an identifier corresponding for example to a syntax element that may be identical to a syntax element identifying a group when the body part also corresponds to a group. For example, the following syntax elements may be used to identify a body part when needed: "Head", "Torso", "Waist", "Leg", "Arm", "Hand", "Foot", "Fingers", "Thumb", "Index", "Middle", "Ring", "Pinky", "Palm", "Plant", "Phalanx", "First", "Second", Third", "Upper", "Lower".

According to a variant, each body part and each group may be identified with an identifier corresponding to a value, for example a binary value or a hexadecimal value.

The identifier(s) of one or more groups is(are) used for signaling, i.e., indicating, in a container, which body part(s) is(are) targeted by a haptic effect. When necessary, the identifier(s) of the targeted body part(s) is(are) used in addition to the identifier(s) of the one or more groups to signal the targeted body part(s).

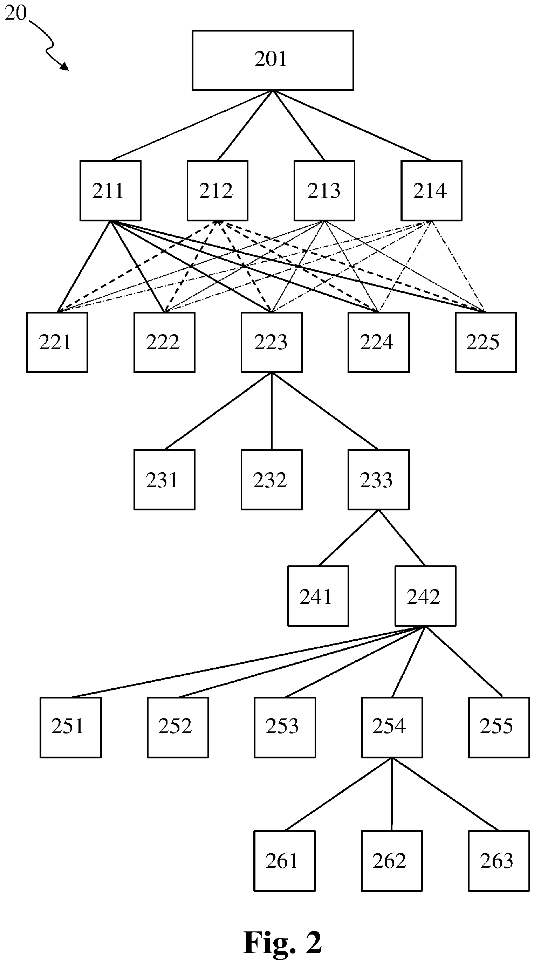

**Figure 2** illustrates a schematic representation 20 of relationships between groups and body parts of the body model 10 in accordance with at least one exemplary embodiment.

Figure 2 shows a part of the groups and body parts of the body model 10 and the connections or links between groups and/or body parts. Figure 2 shows in a hierarchical way the association and dependency between groups and body parts.

A group (e.g., a group 'A') or a body part is said dependent from or belonging to another group (e.g., a group 'B') when said group (e.g., said group 'A') or said body part is comprised in said another group (e.g., said group 'B'). The belonging of a group or of a body part to another group is shown on figure 2 in a hierarchical way with lines that interconnects two boxes belonging to two different layers (a layer corresponding to a hierarchical level).

For example, the box referenced 201 corresponds to the group "All" and belongs to the highest hierarchical level (e.g., level 0) of the structure or tree 20.

Four boxes 211, 212, 213, 214 form a layer having a hierarchical level (e.g., level 1) that is directly inferior to level 0. Box 211 represents for example the group "Left", box 212 represents the group "Right", box 213 represents the group "Front" and box 214 represents the group "Back". Each of the group "Left", "Right", "Front" and "Back" belongs to the group "All", or said differently, the group "All" comprises the groups "Left", "Right", "Front" and "Back".

As it appears in the structure or tree 20, each of the groups "Left", "Right", "Front" and "Back" then comprises the groups represented by boxes referenced 221, 222, 223, 224 and 225. Boxes 221, 222, 223, 224 and 225 form a layer having a hierarchical level (e.g., level 2) that is directly inferior to level 1.

Box 221 represents for example the group "Head", box 222 represents for example the group "Chest", box 223 represents for example the group "Arm", box 224 represents for example the group "Leg" and box 225 represents for example the group "Waist".

In a layer having a hierarchical level (e.g., level 3) directly inferior to level 2, 3 boxes 231, 232, 233 are connected to (and dependent from) box 223. The boxes 231 to 233 represent the groups and/or body parts comprised in the group "Arm" 223. Box 231 represents for example the body part "Upper", box 232 represents for example the body part "Lower" and box 233 represents for example the group "Hand" that may also correspond to a body part.

In a layer having a hierarchical level (e.g., level 4) directly inferior to level 3, 2 boxes 241 and 242 are connected to (and dependent from) box 233. The boxes 241 and 242 represent the groups and body parts comprised in the group "Hand" 233. Box 241 represents for example the body part "Palm" and box 242 represents for example the group "Fingers".

In a layer having a hierarchical level (e.g., level 5) directly inferior to level 4, 5 boxes 251, 252, 253, 254 and 255 are connected to (and dependent from) box 242. The boxes 251 to 255 represent the groups comprised in the group "Fingers" 242. Box 251 represents for example the group "Thumb" (that may also correspond to a body part according to a variant), box 252 represents for example the group "Index" (that may also correspond to a body part according to a variant), box 253 represents for example the group "Middle" (that may also correspond to a body part according to a variant), box 254 represents for example the group "Ring" (that may also correspond to a body part according to a variant) and box 255 represents for example the group "Pinky" (that may also correspond to a body part according to a variant).

When the boxes 251 to 255 represent a group, i.e., the groups "Thumb", "Index", "Middle", "Ring" and "Pinky", the structure or tree 20 comprises an additional layer having a hierarchical level (e.g., level 6) directly inferior to level 5 that comprises boxes 261, 262 and 263, which are connected to (and dependent from) each box 251 to 255. For clarity reasons, only the connections between boxes 261 to 263 on one hand and box 254 on the other hand are shown on figure 2.

Box 261 represents for example the body part "First Phalanx", box 262 represents for example the body part "Second Phalanx" and box 263 represents for example the body part "Third Phalanx".

According to a variant, the body parts "First Phalanx", "Second Phalanx" and "Third Phalanx" are grouped in a group "Phalanx", the group "Phalanx" being connected to (or dependent from) each group "Fingers" 251 to 255 and the body parts "First Phalanx", "Second Phalanx" and "Third Phalanx" being connected to (or dependent from) the group "Phalanx".

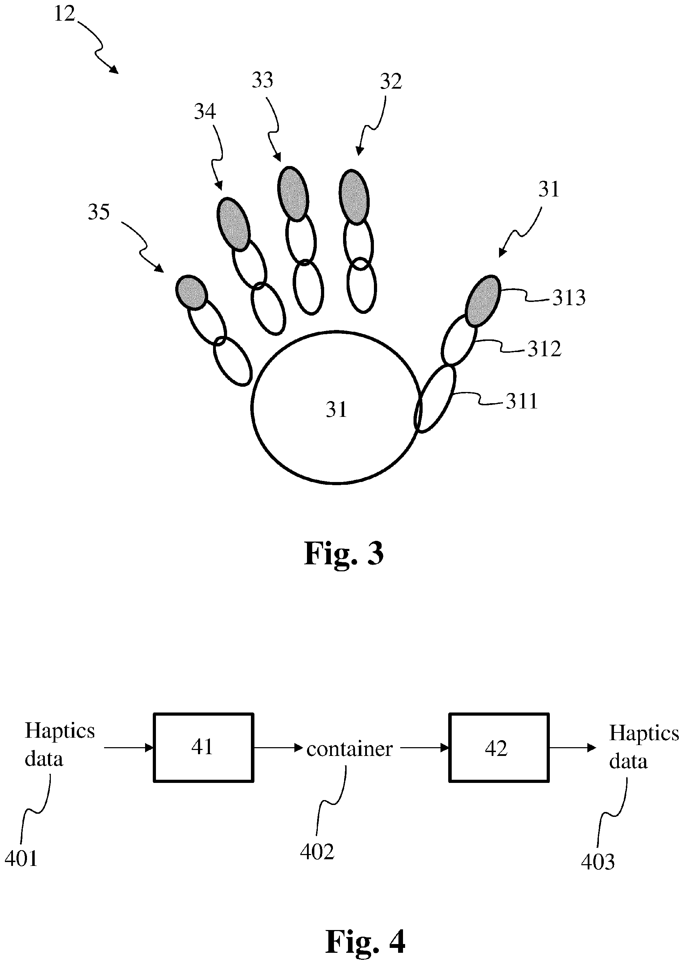

**Figure 3** illustrates a schematic representation of a part of the body model 10 in accordance with at least one exemplary embodiment.

Figure 3 also illustrates the signaling and/or the encoding of data representative of body parts of the body model 10 targeted by a haptic effect in accordance with at least one exemplary embodiment.

Figure 3 shows the groups of body part corresponding to the group "Hand" 12 This group "Hand" 12 is composed of the body part "Palm" 31 and of the group "Fingers", the group "Fingers" comprising the group "Thumb" 31, the group "Index" 32, the group "Middle" 33, the group "Ring" 34 and the group "Pinky" 35. Each group 31 to 35 then comprises 3 phalanxes, i.e., first phalanx 311, second phalanx 312 and third phalanx 313, each corresponding to a body part.

To signal one or more body parts (called targeted body part) in a container comprising information to be transmitted for example from a transmitter to a receiver, from a haptic data generator to a haptic rendering engine or from an encoder to a decoder, first data identifying the targeted body part with reference to the groups comprising the targeted body part is written or encoded into the container.

For example, according to the example of figure 3 wherein the targeted body part corresponds to the third phalanx 313 of each finger 31 to 35 (highlighted with light grey) for both hands, first data used to signal the information may correspond to:
"Hand Third Phalanx"

The amount of data or information used to identify, signal (i.e., represent) or encode 10 body parts (i.e., 10 third phalanxes) is much less than a syntax identifying each body part individually.

According to another example, to signal the 3 phalanxes of the thumb of left hand, first data used to signal the information may correspond to:
"Left Hand Thumb"

According to another example, to identify the third phalanx of the thumb of the right hand, first data used to signal this information may correspond to:
"Right Hand Thumb Third" or "Right Hand Thumb Phalanx Third" depending on how body parts are grouped in the body model.

The use of groups of body parts, taking advantage of the symmetry of the body model 10 (Right/Left and Front/Back) enables to identify clearly and unambiguously each body part of the body model that may be targeted by a haptic effect.

Moreover, the use of groups of body parts enable to encode or signal efficiently the information identifying the targeted body part, especially when the targeted body part encompasses a plurality of body parts of the same type (e.g., phalanxes, both hands, same parts of the legs), the amount of data used to encode or signal the information being reduced.

According to a specific embodiment, the signaling of a targeted body part localized on a specific side of the body model, i.e., on the left-hand side or on the right-hand side, is obtained by writing into the container second data identifying the side, i.e., Left or Right by referring to the groups of body parts "Left" 211 and "Right" 212.

According to a further specific embodiment, the signaling of a targeted body part localized on a specific face of the body model, i.e., on the front face or on the back (or rear) face, is obtained by writing into the container second data identifying the face, i.e., Front or Back by referring to the groups of body parts "Front" 213 and "Back" 214.

According to a further specific embodiment, the first data used to signal the targeted body part (or to encode the data identifying the targeted body part) comprises a first identifier (for example the syntax element describing the targeted body part) identifying the targeted body part and a second identifier identifying the the one or more groups comprising the targeted body part (for example the syntax element(s) describing the one or more groups comprising the targeted body part).

According to another specific embodiment, the first data comprises a third identifier identifying a logical operator. The logical operator corresponds for example to:
- the logical operator NOT; and/or
- the logical operator AND; and/or
- the logical operator OR; and/or
- the logical operator XOR; and/or
- the logical operator NOR.

For example, the upper and lower parts of an arm or both arms may be signaled and/or encoded into the container with the following first data:
"Left Arm NOT Hand" or the left arm, and
"Arm NOT Hand" for both arms.

The use of the logical operator NOT enables to exclude one or more body parts of a group. The exclusion is signaled using the identifier of the logical operator NOT and the identifier of the excluded body part. In the abovementioned example, the body part or group "Hand" is excluded from the group "Arm" to signal and/or encode the identification of lower and upper parts of an arm.

Another way to signal the information would be: "Arm Upper AND Lower".

The use of a logical operator may be more efficient than identifying each targeted body part individually. For example, to identify all the hand but the first phalanx of each finger, the following first data may be used to signal and/or encode the information into the container:
"Hand NOT First Phalanx".

The different embodiments described hereinabove may be combined with each other according to any combination.

**Figure 4** shows schematically a diagram of a signaling / parsing and/or of an encoding / decoding scheme of haptic related data, according to a particular embodiment of the present principles.

The haptic related data 401 advantageously comprises the first data identifying the targeted body part.

According to a variant, the haptic related data 401 further comprises data representative of the haptic effect to be rendered by a haptic device on the targeted body part. The data representative of the haptic effect to be applied on the targeted body part comprises for example:
- the type of the haptic (and/or sensorial) effect (e.g., vibrotactile effect, force effect, stiffness effect, texture effect, temperature effect, wind effect, pain effect, olfactive effect, light-based effect, etc.); and/or
- the amplitude, phase and/or frequency of signal(s) representing the haptic effect; and/or
- the starting time of the haptic effect; and/or
- the duration of the haptic effect; and/or
- an identifier of the haptic effect that is usable by the system receiving the data to retrieve, for example from a memory of the system, parameters of the haptic effect.

The haptic-related data 401 is signaled and/or encoded into a container under the form of encoded data, the container corresponding for example to a file, a bitstream, data packets, data frame(s), via a signaling process and/or encoding process 41 in a module.

The container 402 is transmitted to a module that implements a parsing and/or decoding process 42 to parse, read and/or decode the encoded data comprised in the container 402 to obtain decoded haptic-related data 403. The modules implementing the signaling/encoding process and the parsing/decoding process may be hardware, software or a combination of hardware and software.

The signaling process 41 comprises writing operation(s) according to which data identifying the targeted body part is written into the container 402 and/or data representing the haptic effect is written into the container 402.

In an encoding process, the writing operations of the signaling process may be interpreted as encoding operations.

The parsing process 42 may for example correspond to the inverse operations of the signaling process 41, wherein information and data comprised in the container 402 is parsed and read to obtain the data and information comprised in the container 402.

In a decoding process, the reading operations of the parsing process may be interpreted as decoding operation to decode the data of the container 402 encoded in the container 402 with the encoding process.

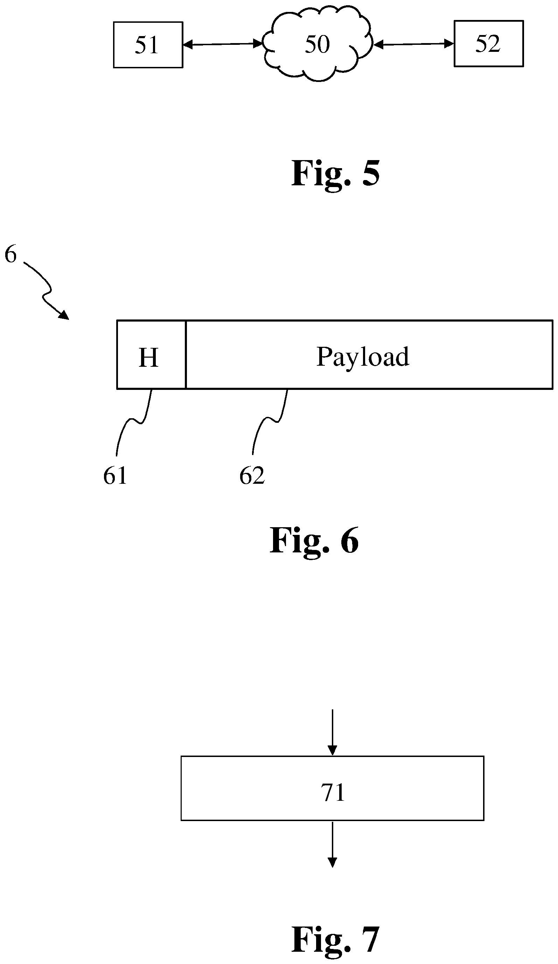

In accordance with an example illustrated in **Figure 5****,** in a transmission context between two remote devices 51 and 52 (of the type of the apparatus 9) over a communication network 50, the device 51 comprises means which are configured to implement a method for signaling and/or encoding data as described in relation with the figures 1 to 4 and 7, and the device 52 comprises means which are configured to implement a method of parsing and/or decoding data as described in relation with figures 1 to 4 and 8.

In accordance with an example, the network 50 is a LAN or WLAN network, adapted to broadcast and/or stream haptic related data from device 51 to parsing/decoding/rendering devices including the device 52.

A signal, intended to be transmitted by the device 51, carries the container 6.

**Figure 6** shows an example of a container 6 when the haptic-related data is transmitted over a packet-based transmission protocol. Figure 6 shows an example structure 6 of haptic-related data stream. The structure consists in a container which organizes the stream in independent syntax elements.

The structure may comprise a header part 61 which is a set of data common to every syntax element of the stream. For example, the header part contains metadata about syntax elements, describing the nature and the role of each of them.

The structure may comprise a payload comprising syntax elements 62 identifying the targeted body part, for example identifier(s) of the group(s) the targeted body part belongs to, identifier(s) of the targeted body part as body part(s) belonging to the group(s) and/or identifier(s) of logical operator(s).

**Figure 7** shows a schematic block diagram of steps of a method of signaling, into a container, a mapping between a haptic effect and one or more body parts, called targeted body part, onto which the haptic effect is to be applied, in accordance with at least one exemplary embodiment.

The targeted body part is defined in reference to a body model, for example the body model described with regard to figure 1 or figure 2. The body model comprises a first plurality of body parts and a second plurality of groups of body parts, each group of the second plurality comprising at least a body part of the first plurality.

Figure 7 also shows a schematic block diagram of steps of a method of encoding data representative of the mapping, according to a specific and non-limiting embodiment. The writing operation(s) described in reference to the signaling method may be interpreted as encoding operation(s) for the encoding method.

In a step 71, first data identifying the targeted body part with reference to at least one group of the second plurality the targeted body part belongs to is written into the container.

In an exemplary embodiment, the method further comprises:
- writing, into the container, second data identifying a side of the body model the targeted body part belongs to, the side being among right side and left side; and/or
- writing, into the container, third data identifying a face of the body model the targeted body part belongs to, the face being among front and back.

In an exemplary embodiment, the first data comprises a first identifier identifying the targeted body part and at least one second identifier identifying the at least one group of the second plurality the targeted body part belongs to.

In another exemplary embodiment, the first data comprises a third identifier identifying a logical operator.

In a further exemplary embodiment, when the logical operator corresponds to a NOT, the method further comprising writing, into the container, fourth data identifying a body part excluded from the at least one group of the second plurality the targeted body part belongs to.

In an additional exemplary embodiment, the method further comprises writing, into the container, fifth data representative of the haptic effect.

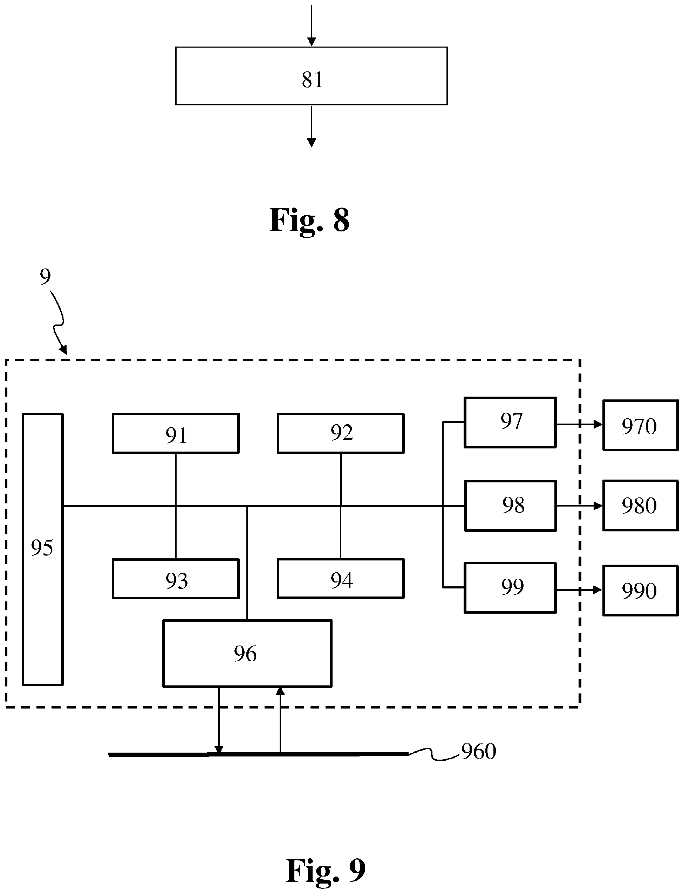

**Figure 8** shows a schematic block diagram of steps of a method of parsing, from a container, data representative of a mapping between a haptic effect and one or more body parts, called targeted body part, onto which the haptic effect is to be applied, in accordance with at least one exemplary embodiment.

The targeted body part is defined in reference to a body model, for example the body model described with regard to figure 1 or figure 2. The body model comprises a first plurality of body parts and a second plurality of groups of body parts, each group of the second plurality comprising at least a body part of the first plurality.

Figure 8 also shows a schematic block diagram of steps of a method of decoding data representative of the mapping, according to a specific and non-limiting embodiment. The reading operation(s) described in reference to the parsing method may be interpreted as decoding operation(s) for the decoding method.

In a step 81, first data identifying the targeted body part with reference to at least one group of the second plurality the targeted body part belongs to is read from the container.

In an exemplary embodiment, the method further comprises:
- reading, from the container, second data identifying a side of the body model the targeted body part belongs to, the side being among right side and left side; and/or
- reading, from the container, third data identifying a face of the body model said targeted body part belongs to, the face being among front and back.

In an exemplary embodiment, the first data comprises a first identifier identifying the targeted body part and at least one second identifier identifying the at least one group of the second plurality the targeted body part belongs to.

In another exemplary embodiment, the first data comprises a third identifier identifying a logical operator.

In a further exemplary embodiment, when the logical operator corresponds to a NOT, the method further comprising reading, from the container, fourth data identifying a body part excluded from the at least one group of the second plurality the targeted body part belongs to.

In an additional exemplary embodiment, the method further comprises reading, from the container, fifth data representative of the haptic effect. The fifth data comprises for example parameters usable by a rendering engine to render the haptic effect or an identifier of the haptic effect enabling the rendering engine to retrieve, for example from a memory of the rendering engine, said parameters.

Parsing the received container enables to obtain information identifying one or more parts of the body model representing a user wearing haptic device(s) or interacting with haptic device(s). The obtained information enables to identify onto which part(s) of the body model the haptic effect is to be applied.

The data representing the haptic effect to render may be comprised in the container or may be received in another container.

According to a variant, the data representative of the haptic effect is stored in a memory of the rendering engine, which receives the container comprising the information about the mapping between the target body part and the haptic effect. According to this variant, the rendering engine does not receive the data representative of the haptic effect but only the information about the mapping.

According to another variant, data representative of the haptic effect corresponds to an identifier identifying which haptic effect is to be rendered. The identifier enables the rendering engine to retrieve data representative of the haptic effect, e.g., parameters, for rendering the haptic effect. Such parameters may for example be obtained from a Look-Up Table (LUT) mapping identifiers of haptic effects with corresponding parameters.

**Figure 9** shows a schematic block diagram illustrating an example of a system in which various aspects and exemplary embodiments are implemented.

System 9 may be embedded as one or more devices including the various components described below. In various embodiments, the system 9 may be configured to implement one or more of the aspects described in the present application.

Examples of equipment that may form all or part of the system 9 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), haptic sensors or actuators, "caves" (system including multiple displays), servers, haptic encoders, haptic decoders, post-processors processing output from a haptic decoder, pre-processors providing input to a haptic encoder, web servers, set-top boxes, wireless (e.g., Bluetooth^{®}) connected wearable haptic devices, game controller, mouse, mousepad, keyboard, palm rest, chairs, desk, XR headset, headphones, bracelet, head and/or lumbar support device or chair, and any other device for processing haptic data or haptic signals, or other communication devices. Elements of system 9, singly or in combination, may be embodied in a single integrated circuit (IC), multiple ICs, and/or discrete components. For example, in at least one embodiment, the processing and encoder/decoder elements of system 9 may be distributed across multiple ICs and/or discrete components. In various embodiments, the system 9 may be communicatively coupled to other similar systems, or to other electronic devices, via, for example, a communications bus or through dedicated input and/or output ports.

The system 9 may include at least one processor 91 configured to execute instructions loaded therein for implementing, for example, the various aspects described in the present application. Processor 91 may include embedded memory, input output interface, and various other circuitries as known in the art. The system 9 may include at least one memory 92 (for example a volatile memory device and/or a non-volatile memory device). System 9 may include a storage device 94, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 94 may include an internal storage device, an attached storage device, and/or a network accessible storage device, as non-limiting examples.

The system 9 may include an encoder/decoder module 93 configured, for example, to process data to provide encoded/decoded haptic signal or data, and the encoder/decoder module 93 may include its own processor and memory. The encoder/decoder module 93 may represent module(s) that may be included in a device to perform the encoding and/or decoding functions. As is known, a device may include one or both of the encoding and decoding modules. Additionally, encoder/decoder module 93 may be implemented as a separate element of system 93 or may be incorporated within processor 91 as a combination of hardware and software as known to those skilled in the art.

Program code to be loaded onto processor 91 or encoder/decoder 93 to perform the various aspects described in the present application may be stored in storage device 94 and subsequently loaded onto memory 92 for execution by processor 91. In accordance with various embodiments, one or more of processor 91, memory 92, storage device 94, and encoder/decoder module 93 may store one or more of various items during the performance of the processes described in the present application. Such stored items may include, but are not limited to, haptic-related data, encoded/decoded data identifying body part(s) and/or group(s) of body part(s) of a body model, a bitstream, matrices, variables, and intermediate or final results from the processing of equations, formulas, operations, and operational logic.

In several embodiments, memory inside of the processor 91 and/or the encoder/decoder module 93 may be used to store instructions and to provide working memory for processing that may be performed during encoding or decoding.

In other embodiments, however, a memory external to the processing device (for example, the processing device may be either the processor 91 or the encoder/decoder module 93) may be used for one or more of these functions. The external memory may be the memory 92 and/or the storage device 94, for example, a dynamic volatile memory and/or a non-volatile flash memory. In several embodiments, an external non-volatile flash memory may be used to store the operating system of a television. In at least one embodiment, a fast external dynamic volatile memory such as a RAM may be used as working memory for video coding and decoding operations, such as for MPEG-V.

The input to the elements of system 9 may be provided through various input devices as indicated in block 95. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

In various embodiments, the input devices of block 95 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 9 to other electronic devices across USB and/or HDMI connections. It is to be understood that various aspects of input processing, for example, Reed-Solomon error correction, may be implemented, for example, within a separate input processing IC or within processor 91 as necessary. Similarly, aspects of USB or HDMI interface processing may be implemented within separate interface ICs or within processor 91 as necessary. The demodulated, error corrected, and demultiplexed stream may be provided to various processing elements, including, for example, processor 91, and encoder/decoder 93 operating in combination with the memory and storage elements to process the data stream as necessary for presentation on an output device.

Various elements of system 9 may be provided within an integrated housing. Within the integrated housing, the various elements may be interconnected and transmit data therebetween using suitable connection arrangement 95, for example, an internal bus as known in the art, including the I2C bus, wiring, and printed circuit boards.

The system 9 may include communication interface 96 that enables communication with other devices via communication channel 960. The communication interface 96 may include, but is not limited to, a transceiver configured to transmit and to receive data over communication channel 960.

The communication interface 96 may include, but is not limited to, a modem or network card and the communication channel 960 may be implemented, for example, within a wired and/or a wireless medium.

Data may be streamed to the system 9, in various embodiments, using a Wi-Fi network such as IEEE 802.11. The Wi-Fi signal of these embodiments may be received over the communications channel 960 and the communications interface 96 which are adapted for Wi-Fi communications. The communications channel 960 of these embodiments may be typically connected to an access point or router that provides access to outside networks including the Internet for allowing streaming applications and other over-the-top communications.

Other embodiments may provide streamed data to the system 9 using a set-top box that delivers the data over the HDMI connection of the input block 95.

Still other embodiments may provide streamed data to the system 9 using the RF connection of the input block 95.

The streamed data may be used as a way for signaling information used by the system 9. The signaling information may comprise the data encoded in a container such as a binary stream or a haptic effect file for example.

It is to be appreciated that signaling may be accomplished in a variety of ways. For example, one or more syntax elements, flags, and so forth may be used to signal information to a corresponding decoder in various embodiments.

The system 9 may provide an output signal to various output devices, including a display 970, speakers 980, and other peripheral devices 990 like haptic devices/actuators.

In various embodiments, control signals may be communicated between the system 9 and the display 970, speakers 980, or other peripheral devices 990 using signaling such as AV.Link (Audio/Video Link), CEC (Consumer Electronics Control), Audio protocols, USB (Universal Serial Bus), HIF UHP (Haptics Industry Forum - Universal Haptic Protocol) or other communications protocols that enable device-to-device control with or without user intervention.

The output devices may be communicatively coupled to system 9 via dedicated connections through respective interfaces 97, 98, and 99.

Alternatively, the output devices may be connected to system 9 using the communications channel 960 via the communications interface 96. The display 970, speakers 980 and/or actuators 990 may be integrated in a single unit with the other components of system 9 in an electronic device such as, for example, a television.

In various embodiments, the display interface 97 may include a display driver, such as, for example, a timing controller (T Con) chip.

The display 970 speakers 980 and/or actuators 990 may alternatively be separate from one or more of the other components, for example, if the RF portion of input 95 is part of a separate set-top box. In various embodiments in which the display 970, speakers 980 and/or actuators 990 may be external components, the output signal may be provided via dedicated output connections, including, for example, HDMI ports, USB ports, or COMP outputs.

In **Figures 1 to 9****,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic encoders, video and/or haptic decoders, post-processors processing output from a video decoder, pre-processors providing input to a video encoder, web servers, set-top boxes, wireless connected wearable haptic devices, e.g., Bluetooth^{®} connected wearable haptic devices, game controller, mouse, mousepad, keyboard, palm rest, chairs, desk, XR headset, headphones, bracelet, head and/or lumbar support device or chair, and any other device for processing haptic data or signals representative of one or more haptic feedback or effect, or other communication devices. As should be clear, the equipment may be mobile.

Computer software may be implemented by the processor 91 or by hardware, or by a combination of hardware and software. As a non-limiting example, the embodiments may be also implemented by one or more integrated circuits. The memory 92 may be of any type appropriate to the technical environment and may be implemented using any appropriate data storage technology, such as optical memory devices, magnetic memory devices, semiconductor-based memory devices, fixed memory, and removable memory, as non-limiting examples. The processor 91 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the specification are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received haptic signal (including possibly a received bitstream which encodes one or more haptic signals) in order to produce a final output suitable for rendering haptic effects or for further processing in the reconstructed haptic feedback or effect. In various embodiments, such processes include one or more of the processes typically performed by a decoder. In various embodiments, such processes also, or alternatively, include processes performed by a decoder of various implementations described in this application, for example,

Various implementations involve encoding. In an analogous way to the above discussion about "decoding", "encoding" as used in this application may encompass all or part of the processes performed, for example, on an input haptic signal in order to produce an encoded bitstream. In various embodiments, such processes include one or more of the processes typically performed by an encoder. In various embodiments, such processes also, or alternatively, include processes performed by an encoder of various implementations described in this application.

Additionally, this application may refer to "obtaining" various pieces of information. Obtaining the information may include one or more of, for example, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, or estimating the information.

Also, as used herein, the word "signal" refers to, among other things, indicating something to a corresponding decoder. In this way, in an embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of signaling, into a container (402), a mapping between a haptic effect and at least a body part of a human body targeted by said haptic effect, called targeted body part, said human body being represented with a body model (10), said body model (10) comprising a first plurality of body parts and a second plurality of groups of body parts, each group of said second plurality comprising at least a body part of said first plurality, the method comprising writing (71), into said container (402), first data identifying said targeted body part with reference to at least one group of said second plurality said targeted body part belongs to.

2. The method according to claim 1, further comprising:
- writing, into said container (402), second data identifying a side of said body model (10) said targeted body part belongs to, said side being among right side and left side; and/or
- writing, into said container (402), third data identifying a face of said body model (10) said targeted body part belongs to, said face being among front and back.

3. The method according to claim 1 or 2, wherein said first data comprises a first identifier identifying said targeted body part and a second identifier identifying said at least one group of said second plurality said targeted body part belongs to.

4. The method according to one of claims 1 to 3, wherein, said first data comprises a third identifier identifying a logical operator.

5. The method according to claim 4, wherein, when said logical operator corresponds to a NOT, the method further comprising writing, into said container (402), fourth data identifying a body part excluded from said at least one group of said second plurality said targeted body part belongs to.

6. The method according to one of claims 1 to 5, further comprising writing into said container fifth data representative of said haptic effect.

7. A method of parsing, from a container (402), data representative of a mapping between a haptic effect and at least a body part of a human body targeted by said haptic effect, called targeted body part, said human body being represented with a body model (10), said body model (10) comprising a first plurality of body parts and a second plurality of groups of body parts, each group of said second plurality comprising at least a body part of said first plurality, the method comprising reading, from said container (402), first data identifying said targeted body part with reference to at least one group of said second plurality said targeted body part belongs to.

8. The method according to claim 7, further comprising:
- reading, from said container (402), second data identifying a side of said body model (10) said targeted body part belongs to, said side being among right side and left side; and/or
- reading, from said container (402), third data identifying a face of said body model (10) said targeted body part belongs to, said face being among front and back.

9. The method according to claim 7 or 8, wherein said first data comprises a first identifier identifying said targeted body part and at least one second identifier identifying said at least one group of said second plurality said targeted body part belongs to.

10. The method according to one of claims 7 to 9, wherein said first data comprises a third identifier identifying a logical operator.

11. The method according to claim 10, wherein, when said logical operator corresponds to a NOT, the method further comprising reading, from said container (402), fourth data identifying a body part excluded from said at least one group of said second plurality said targeted body part belongs to.

12. The method according to one of claims 7 to 11, further comprising reading, from said container (402), fifth data representative of said haptic effect.

13. An apparatus (9) of signaling, into a container (402), a mapping between a haptic effect and at least a body part of a human body targeted by said haptic effect, called targeted body part, wherein said apparatus comprising a memory (92, 94) associated with at least a processor (91) configured to implement the method according to any one of claims 1 to 6.

14. An apparatus (9) of parsing, from a container (402), data representative of a mapping between a haptic effect and at least a body part of a human body targeted by said haptic effect, called targeted body part, wherein said apparatus (9) comprising a memory (92, 94) associated with at least a processor (91) configured to implement the method according to any one of claims 7 to 12.
